# EUROPEAN PATENT APPLICATION

(11) **EP 4 717 941 A1**
(43) Date of publication of application: **01.04.2026**
(21) Application number: 25205143.8
(22) Date of filing: 26.09.2025
(51) Int. Cl.: F16D 13/52

(54) **CLUTCH CONTROL DEVICE AND SADDLE RIDING VEHICLE**

(30) Priority: 30.09.2024 JP 2024171816
(71) Applicant: HONDA MOTOR CO., LTD., Tokyo 105-8404 (JP)
(72) Inventor: NAITO, Masazumi, Tokyo, 105-8404 (JP); NAKANO, Kenichi, Tokyo, 105-8404 (JP); ONO, Junya, Tokyo, 105-8404 (JP); ISHII, Daichi, Tokyo, 105-8404 (JP); YONEDA, Keigo, Tokyo, 105-8404 (JP)
(74) Representative: Dehns

(57) **Abstract**

A clutch control device (70) includes: a release shaft (60) that actuates a clutch device (51); a clutch lever shaft (81) to which manual operation is input; and a second driven gear (89) that functions as an actuator actuating member to which a driving force of a clutch actuator (71) is input. The release shaft (60) is rotated by the clutch lever shaft (81) and the second driven gear (89). The clutch lever shaft (81) is arranged to be offset from an axis CR of the release shaft (60) in an axial radial direction. This ensures a space for user's legs, and increases the degree of flexibility in installation of the clutch control device (70).

## Description

### [Technical Field]

The present invention relates to a clutch control device and a saddle riding vehicle.

### [Background Art]

In recent years, a saddle riding vehicle has been provided which is installed with a clutch control device that automatically performs the connection/disconnection operation of a clutch device through electrical control (see, for example, Patent Literature 1). The clutch control device of Patent Literature 1 is configured to include a release shaft actuating a clutch device, a clutch lever shaft to which manual operation is input, and an actuator actuating member to which a driving force of a clutch actuator is input, in which the clutch lever shaft to which a clutch cable is connected is disposed in an upper portion of the release shaft.

### [Citation List]

### [Patent Literature]

Patent Literature 1: Japanese Patent Publication No. 7462108

### [Summary of Invention]

### [Technical Problem]

Then, there are various layout structures and shapes for a power unit as an installation object in which a clutch control device is installed. Therefore, if a conventional clutch control device is installed on various saddle riding vehicles, there is a risk that a clutch lever area, in particular, in an upper portion of a clutch lever shaft restricts a space for user's legs, and/or the like around a clutch device. Further, there is a risk that the structure and shape around the clutch device hinder the installation of the clutch control device.

The present invention has been achieved in view of the circumstance described above, and an object of at least preferred embodiments thereof is to ensure a space for user's legs and another object of at least preferred embodiments thereof is to increase the degree of flexibility in installation of the clutch control device.

### [Solution to Problem]

An aspect of the invention provides a clutch control device that includes: a release shaft that actuates a clutch device; a clutch lever shaft to which manual operation is input; and an actuator actuating member to which a driving force of a clutch actuator is input, in which the release shaft is rotated by the clutch lever shaft and the actuator actuating member, and the clutch lever shaft is arranged to be offset from an axis of the release shaft in an axial radial direction.

### [Advantageous Effects of Invention]

According to the present invention, this makes it possible to ensure a space for user's legs and increases the degree of flexibility in installation of the clutch control device.

### [Brief Description of Drawings]

Embodiments of the invention will now be described, by way of example only, with reference to the accompanying drawings, wherein:
FIG. 1 is a side view of a saddle riding vehicle according to an embodiment of the present invention.
FIG. 2 is a plan view illustrating a transmission together with a peripheral configuration.
FIG. 3 is a diagram illustrating a clutch control device and a peripheral configuration thereof as viewed from a right side of the vehicle body.
FIG. 4 is a diagram illustrating a condition where a right cover is removed from FIG. 3.
FIG. 5 is a view taken in the direction of the arrows a-a of FIG. 1.
Fig. 6 is a diagram where a clutch cover is removed from FIG. 5.
FIG. 7 is a diagram illustrating the clutch control device and a peripheral configuration as viewed from a front side of the vehicle body.
FIG. 8 is a view illustrating a transmission mechanism in a gearcase as viewed from above.
FIG. 9 is a section view taken along line b-b of FIG. 8.
FIG. 10 is a diagram illustrating a main part of the transmission mechanism.
FIG. 11 is a diagram for a description of a stopper.

### [Description of Embodiments]

The following describes an embodiment of the present invention with reference to the drawings. Note that, in the description, descriptions on directions such as front and rear, right and left, and upper and lower are identical to directions with respect to a vehicle body insofar as descriptions are not particularly given.

Reference sign FR illustrated in each drawing indicates a front side of the vehicle body, reference sign UP indicates an upper side of the vehicle body, and reference sign LH indicates a left side of the vehicle body.

### [Embodiment]

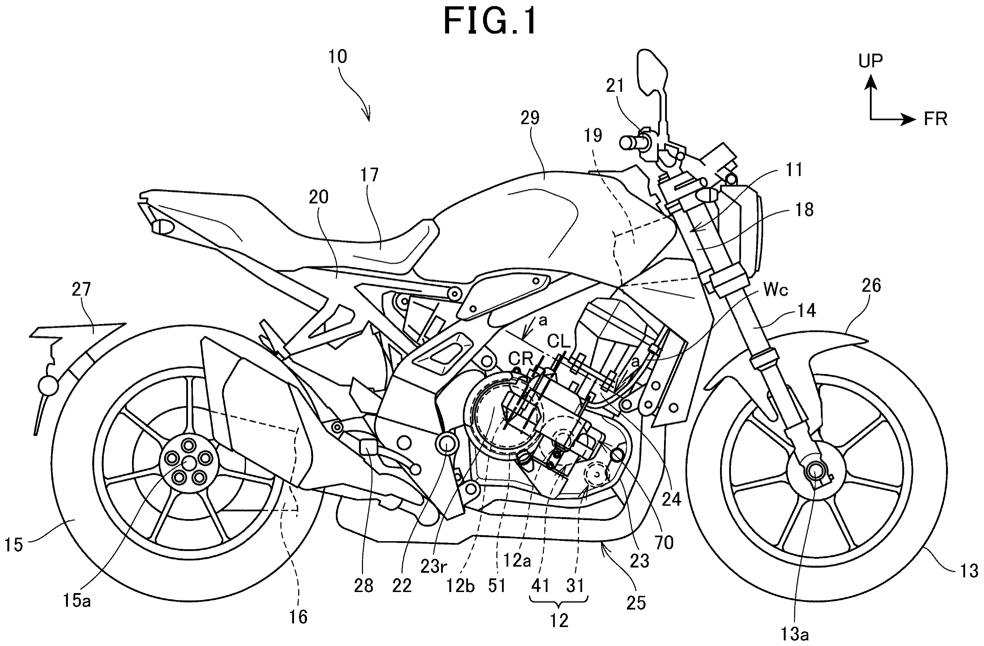

FIG. 1 is a side view of a saddle riding vehicle 10 according to the embodiment of the present invention.

The saddle riding vehicle 10 is a vehicle including a body frame 11, a power unit 12 supported by the body frame 11, a front fork 14 that steerably supports a front wheel 13, a swing arm 16 that supports a rear wheel 15, and a seat 17 for an occupant.

The saddle riding vehicle 10 is the vehicle on which the occupant straddles the seat 17 to ride. The seat 17 is disposed above a rear portion of the body frame 11.

The body frame 11 includes a head pipe 18 disposed at a front end portion of the body frame 11, a front frame 19 positioned at a rear of the head pipe 18, and a rear frame 20 positioned at a rear of the front frame 19. A front end portion of the front frame 19 is connected to the head pipe 18.

The seat 17 is supported by the rear frame 20.

The front fork 14 is supported by the head pipe 18 so as to be freely steerable in right and left directions. The front wheel 13 is supported by an axle 13a disposed at a lower end portion of the front fork 14. A handlebar 21 for steering, which is gripped by the occupant, is mounted to an upper end portion of the front fork 14.

The swing arm 16 is supported by a pivot shaft 22 that is supported by the body frame 11. The pivot shaft 22 is a shaft that extends horizontally in a vehicle width direction. The pivot shaft 22 is inserted through a front end portion of the swing arm 16. The swing arm 16 swings in a vertical direction around the pivot shaft 22.

The rear wheel 15 is supported by an axle 15a disposed at a rear end portion of the swing arm 16.

The power unit 12 is arranged between the front wheel 13 and the rear wheel 15, and supported by the body frame 11.

The power unit 12 is an internal combustion engine. The power unit 12 includes a crankcase 23 and a cylinder portion 24 that houses a reciprocating piston. The cylinder portion 24 has an exhaust port to which an exhaust device 25 is connected.

An output from the power unit 12 is transmitted to the rear wheel 15 by a driving force transmitting member that connects the power unit 12 to the rear wheel 15.

The saddle riding vehicle 10 includes a front fender 26 that covers the front wheel 13 from above, a rear fender 27 that covers the rear wheel 15 from above, steps 28 on which the occupant places one's feet, and a fuel tank 29 to store fuel to be used by the power unit 12.

The front fender 26 is mounted to the front fork 14. The rear fender 27 and the steps 28 are disposed below the seat 17. The fuel tank 29 is supported by the body frame 11.

The power unit 12 includes a transmission 41 and an engine 31 essentially making up the internal combustion engine in the front thereof.

The engine 31 includes a crankshaft 12a extending in the right-left direction and rotatably supported by the crankcase 23. The crankcase 23 has a right portion to which a right crankcase cover 23r (hereinafter referred to as a "right cover 23r") is detachably mounted to cover portions excepting for the cylinder portion 24 in the power unit 12 (a transmission 41, a clutch device 51 described later, and/or the like) from an outside in one of the vehicle width directions (right side). For example, a chain power transmission mechanism is employed for a power transmitting member between the power unit 12 and the rear wheel 15.

### [Transmission 41]

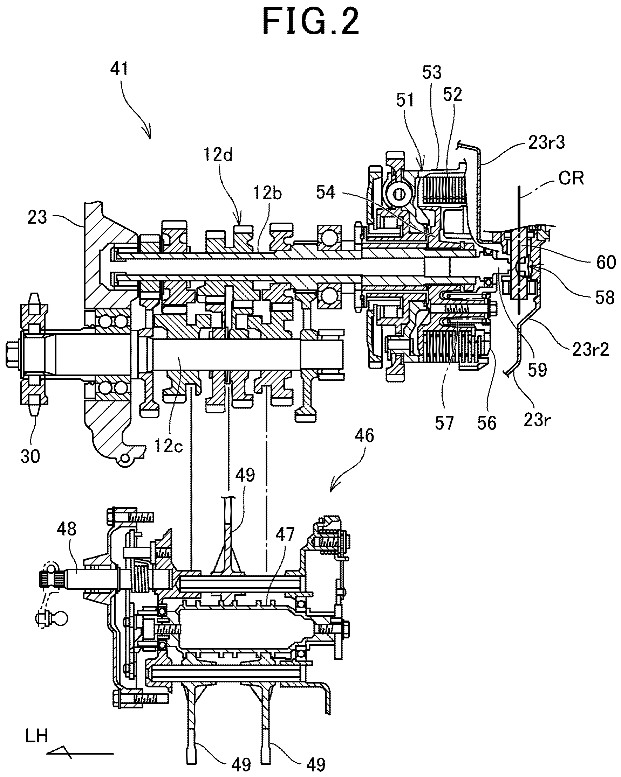

The transmission 41 is described with reference to FIG. 2.

The transmission 41 has a main shaft 12b, a countershaft 12c, and a speed gear group 12d on both the shafts 12b and 12c, which essentially makes up a multi-speed transmission. The main shaft 12b and the countershaft 12c are positioned at a rear of the crankshaft 12a. The clutch device 51 is coaxially arranged on a right end portion of the main shaft 12b. The clutch device 51 is a mechanism to perform connection/disconnection of the power transmission between the crankshaft 12a of the engine 31 and the main shaft 12b.

The countershaft 12c essentially makes up an output shaft of the transmission 41 and an output shaft of the power unit 12. A left end portion of the countershaft 12c protrudes toward a rear left side of the crankcase 23, and to the left end portion, a drive sprocket 30 of the chain power transmission mechanism is mounted.

In the vicinity of the transmission 41, a change mechanism 46 is housed to switch a gear pair of the speed gear group 12d. The change mechanism 46 has a hollow cylindrical shift drum 47 extending parallel to the main shaft 12b and the countershaft 12c, a shift spindle 48, and a plurality of shift forks 49. The shift spindle 48 rotates the shift drum 47 in response to the operation of the shift pedal. The rotation of the shift drum 47 actuates the plurality of shift forks 49 to move along a lead groove formed in an outer periphery of the shift drum 47 so that the gear pair of the speed gear group 12d is switched. It is noted that the shift pedal is an example of a shift operator.

### [Clutch Device 51]

The clutch device 51 is arranged in the vicinity of an inner side of the right cover 23r. The clutch device 51 is a wet multiplate clutch with a plurality of clutch plates 52 stacked in an axis direction of the main shaft 12b functioning as a clutch shaft.

The clutch device 51 includes a clutch outer 53 that rotates integrally with the main shaft 12b, and a clutch center 54 that is positioned on an inner periphery of the clutch outer 53 and that is rotatable relative to the main shaft 12b. The rotation of the crankshaft 12a is transmitted to the clutch center 54, so that the clutch center 54 and the crankshaft 12a are rotated integrally. The plurality of clutch plates 52 is stacked between the clutch outer 53 and the clutch center 54.

On a right (an outside in the vehicle width direction) of the stacked clutch plates 52, a pressure plate 56 with approximately the same diameter as the clutch plate 52 is arranged. The pressure plate 56 is biased leftward by a biasing force of a clutch spring 57 to move the stacked clutch plates 52 into pressure contact (frictional engagement) with each other. As a result, the clutch device 51 is brought into the connected state capable of transmitting power, so that the rotation of the crankshaft 12a is transmitted to the main shaft 12b.

The clutch device 51 is formed as a normal closed clutch that is in the connected state in normal times without input from outside.

Release of the pressure contact (frictional engagement) among the clutch plates 52 is performed by a release mechanism 58 arranged in the vicinity of the inner side of the right cover 23r. The release mechanism 58 releases the pressure contact among the clutch plates 52 either when the occupant operates the clutch lever (manual operation) or when the driving force of the clutch actuator 71 is input. It is noted that the clutch lever is an example of a clutch operator.

### [Release Mechanism 58]

The release mechanism 58 includes a lifter shaft 59 and a release shaft 60. The lifter shaft 59 is arranged on the right side of the main shaft 12b in a way to be able to reciprocate axially. The release shaft 60 is positioned on the right with respect to the lifter shaft 59 and intersects at right angles to the axis direction of the lifter shaft 59. The release shaft 60 is rotatable about the axis CR passing through the axial center of the release shaft 60.

More specifically, the release shaft 60 is arranged with the head forward position in which it is inclined with the top located forward with respect to the vertical direction as viewed from the side of the vehicle corresponding to as viewed in the axis direction of the main shaft 12b (see FIG. 1). An upper portion of the release shaft 60 protrudes outside the right cover 23r.

An eccentric cam portion 58a is arranged on the release shaft 60. The eccentric cam portion 58a is engaged with a right end portion of the lifter shaft 59. Upon rotation of the release shaft 60 about the axis, the action of the eccentric cam portion 58a moves the lifter shaft 59 rightward.

The lifter shaft 59 is arranged to be able to reciprocate integrally with the pressure plate 56 of the clutch device 51. Therefore, upon rightward movement of the lifter shaft 59, the pressure plate 56 moves (lifts) rightward against the biasing force of the clutch spring 57. As a result, the frictional engagement among the stacked clutch plates 52 is disengaged, so that the normal closed clutch device 51 is switched from the connected state capable of transmitting power to the disconnected state incapable of transmitting power.

The release mechanism 58 may be configured to include a rack and pinion, a feed screw and/or the like, without limitation to the eccentric cam mechanism. Also, the structure and shape of each portion of the release mechanism 58 including the release shaft 60, and the structure and shape of each member of the clutch device 51, and/or the like may be changed as appropriate.

### [Clutch Control Device 70]

The saddle riding vehicle 10 of the present configuration includes a clutch control device 70 to control the clutch device 51.

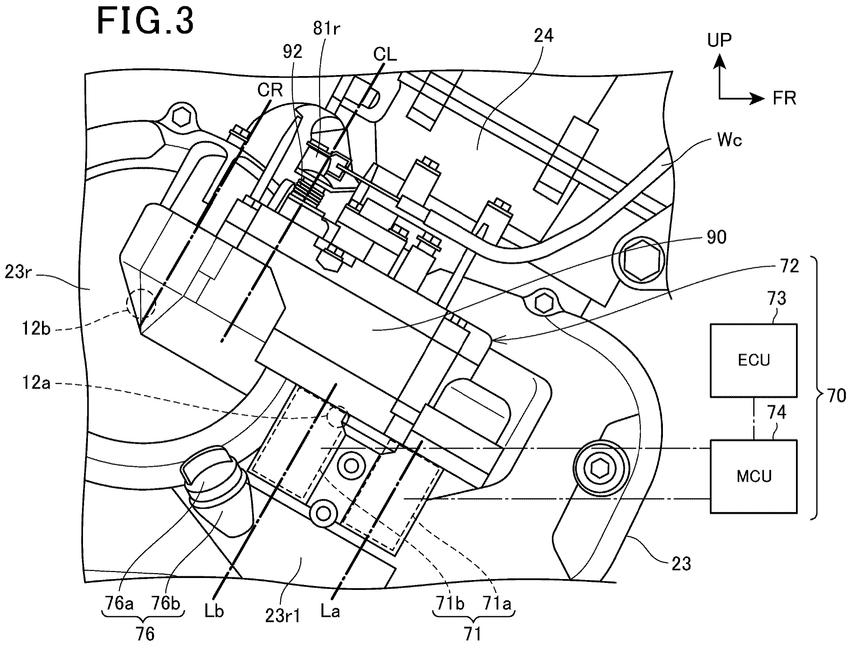

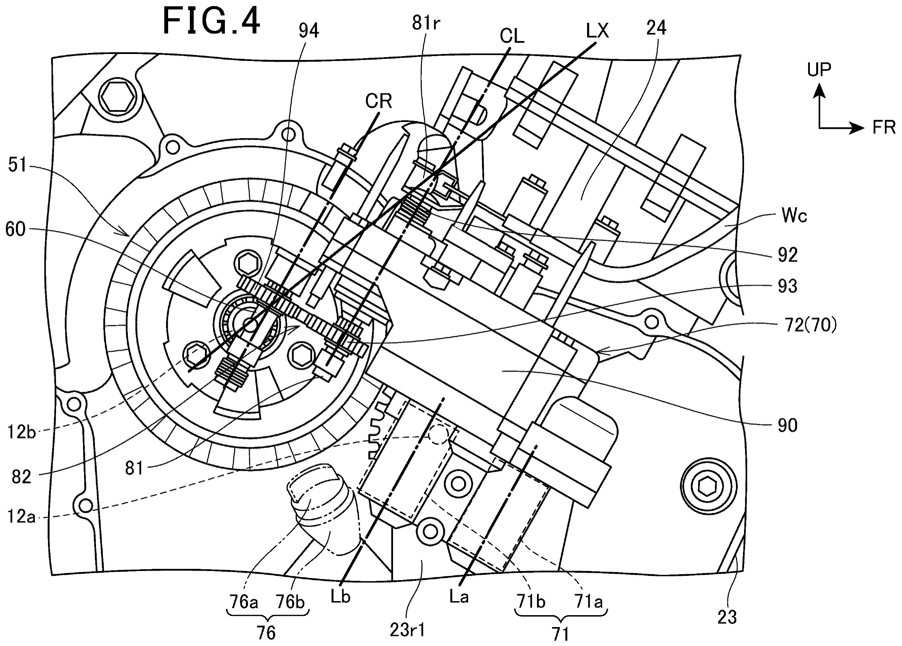

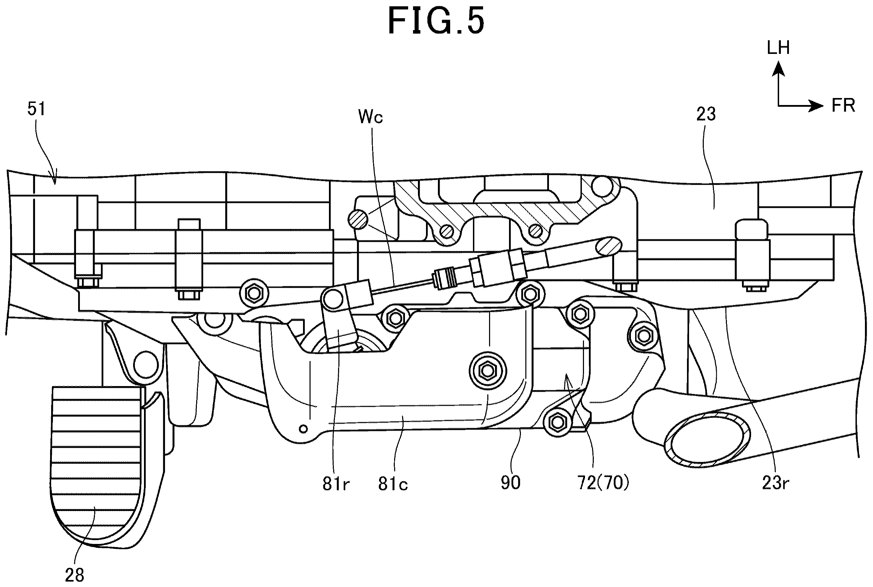

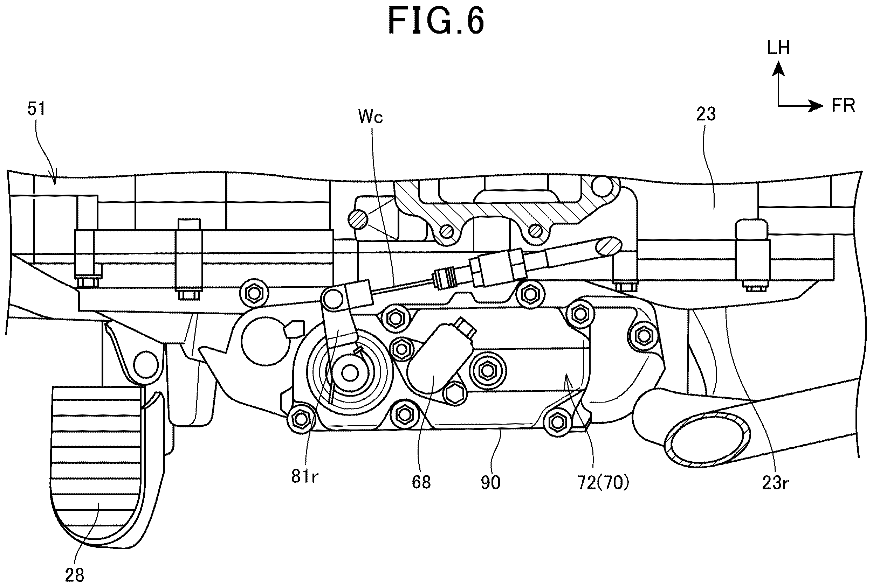

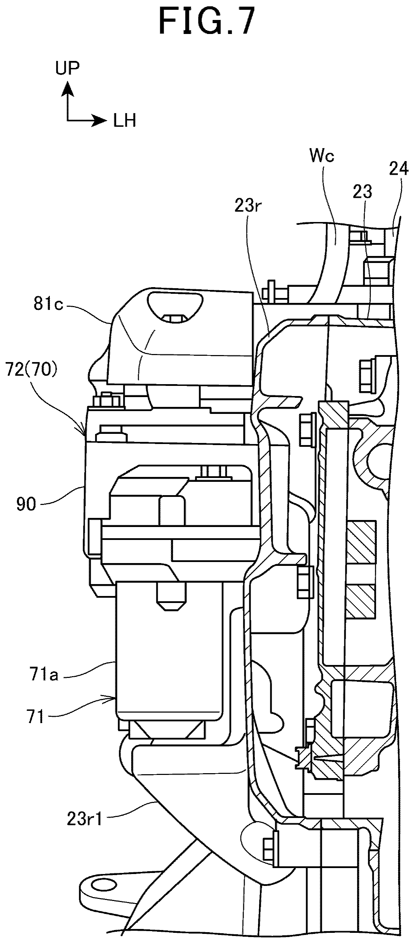

The clutch control device 70 will be described with reference to FIGS. 3 to 11. FIG. 3 is a diagram illustrating the clutch control device 70 and a peripheral configuration thereof as viewed from the right side of the vehicle body, and FIG. 4 is a diagram illustrating a condition where the right cover 23r is removed from FIG. 3. FIG. 5 is a view taken in the direction of the arrows a-a of FIG. 1. Fig. 6 is a diagram where a clutch cover 81c is removed from FIG. 5. The clutch cover 81c is a cover to cover a driven clutch lever 81r and its surroundings from above. As shown in FIG. 6, in the vicinity of an upper portion of the driven clutch lever 81r, a position sensor 68 outputting a gear position signal is arranged. The position sensor 68 is also covered by the clutch cover 81c. FIG. 7 is a diagram illustrating the clutch control device 70 and a peripheral configuration as viewed from the front side of the vehicle body.

As shown in FIGS. 3 to 7, the clutch control device 70 includes a mechanism portion 72, an engine control ECU 73 (FIG. 3), and a motor control unit 74 (FIG. 3), the mechanism portion 72 receiving input of the operation of the clutch lever (manual operation) and the driving force of the clutch actuator 71. The mechanism portion 72 is covered with a gearcase 90.

The engine control ECU 73 shown in FIG. 3 functions as a computer to control each portion of the saddle riding vehicle 10, which will be hereinafter referred to as the "ECU 73". The motor control unit 74 shown in FIG. 3 is a unit to control the drive and stop of motors 71a, 71b which are drive sources of the clutch actuator 71. The motor control unit 74 will be hereinafter referred to as the "MCU 74".

One 71a of the motors is disposed in a lower portion of a front side area of the mechanism portion 72, and the other motor 71b is disposed at the rear of the motor 71a in a lower portion of the front side area of the mechanism portion 72. As shown in FIG. 3, as viewed from the side of the vehicle body, a motor axis La passing through the axial center of the motor 71a is inclined upward toward the front, and a motor axis Lb passing through the axial center of the motor 71b is inclined upward toward the front at the rear of the motor axis La and extends parallel to the motor axis La.

On the right cover 23r forming partially the clutch device 51, a first bulge portion 23r1 is disposed which bulges below the motors 71a, 71b in the vehicle width direction (FIG. 3, FIG. 4), and a second bulge portion 23r2 is disposed which bulges above and behind the first bulge portion 23r1 in the vehicle width direction (FIG. 3, FIG. 4). Further, above the first bulge portion 23r1 and the second bulge portion 23r2, a recessed portion 23r3 (see FIG. 2) recessed inwardly in the vehicle width direction is disposed. In the present configuration, by utilizing the space in the recessed portion 23r3, a part (the mechanism portion 72) of the clutch control device 70 is arranged.

As shown in FIGS. 3 and 4, in the right cover 23r, an oil filler 76 is disposed at the rear of the first bulge portion 23r1 and in front of the clutch device 51. The oil filler 76 has an oil filler port 76a integrally disposed in the right cover 23r, and a cap 76b to cover the oil filler port 76a.

In this manner, the use of the plurality of motors 71a, 71b as the drive source of the clutch actuator 71 may enable employment of a small motor as well as ensuring required torque and minimization of an increase in size of the mechanism portion 72, as compared with the use of a single motor. Also, the recessed portion 23r3 may be utilized to arrange the mechanism portion 72 close to the inside in the vehicle width direction. This makes it possible to minimize the jutting of the mechanism portion 72 outward in the vehicle width direction, and/or the like.

The first bulge portion 23r1 and the second bulge portion 23r2 also make it possible to protect the clutch control device 70 from an obstacle and/or flying debris coming from below.

Based on a predetermined parameter composed of at least any of an engine speed (the number of rotation of the crankshaft 12a), a throttle opening, a gear position signal, a shift pedal load, a clutch disconnection signal and rotational speeds of the front and rear wheels, the ECU 73 controls an actuation torque applied to the release shaft 60 by the MCU 74 controlling the motors 71a, 71b. The control includes a plurality of clutch control modes including an automatic mode M1 for performing automatic control, a manual mode M2 for performing manual operation, and a manual intervention mode M3 for performing temporary manual operation.

The automatic mode M1 is a mode in which the clutch device 51 is controlled by calculating a clutch capacity suitable for traveling conditions in accordance with automatic start and shift control so that the clutch control is automatically performed to enable the motorcycle to travel without operation of the clutch lever.

The manual mode M2 is a mode in which the clutch device 51 is controlled by calculating the clutch capacity in accordance with clutch operation instructions provided by the occupant so that connection/disconnection of the clutch device 51 is controlled to fulfill occupant's intention by the occupant's clutch lever operation. It is noted that even in the manual mode M2, if shift operation is performed without clutch operation, the clutch control can automatically intervene.

The manual intervention mode M3 is a mode in which the clutch operation instruction is received from the occupant during the automatic mode M1, then the clutch capacity is calculated from the clutch operation instruction to control the clutch device 51, which is a temporary manual operation mode.

For details of the control in the modes, the well-known control described in Japanese Patent No. 7462108 and/or the like is widely applicable.

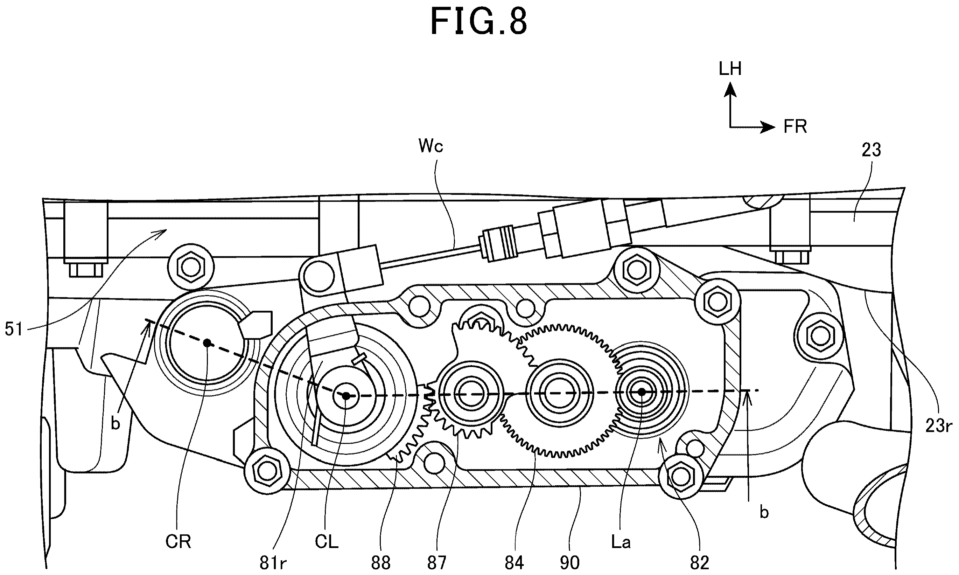

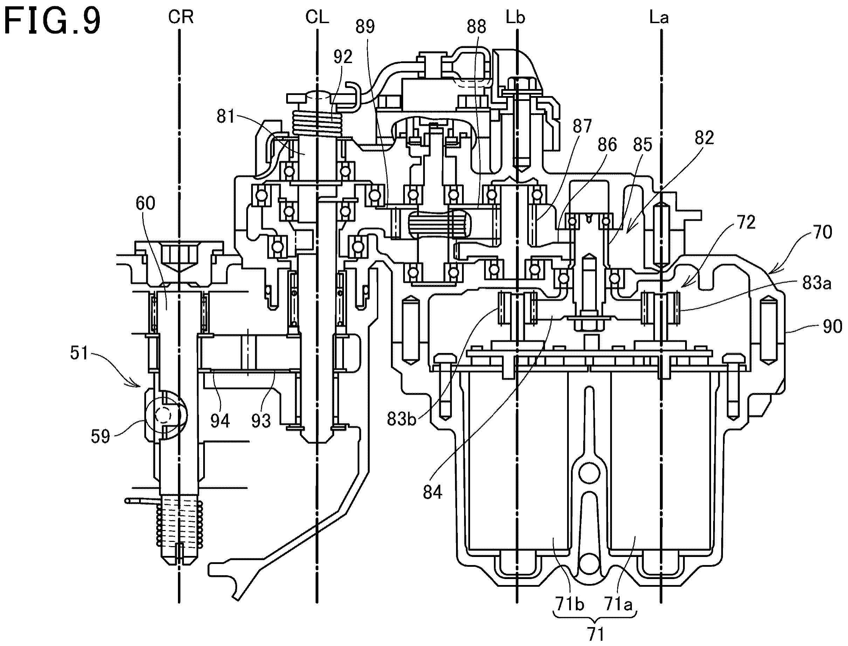

The mechanism portion 72 is arranged in a range from an upper front portion of the right cover 23r to an upper right portion of the crankcase 23. As shown in FIGS. 4 to 6, the mechanism portion 72 includes the motors 71a, 71b and a clutch lever shaft 81 to which the clutch lever operation (manual operation) is input. The mechanism portion 72 further includes a transmission mechanism 82 (FIG. 8, FIG. 9) that transmits the driving force of the motors 71a, 71b and the rotation of the clutch lever shaft 81 to the release shaft 60.

It is noted that reference sign CR shown in FIG. 4 and/or the like indicates the axis passing through the axial center of the release shaft 60, while reference sign CL indicates the axis passing through the axial center of the clutch lever shaft 81. Also, reference sign Wc shown in FIG. 4 and the like indicates a clutch wire for transmitting the clutch lever operation to the clutch lever shaft 81. FIG. 3 and FIG. 4 illustrate the condition where the clutch lever cover 81c is removed.

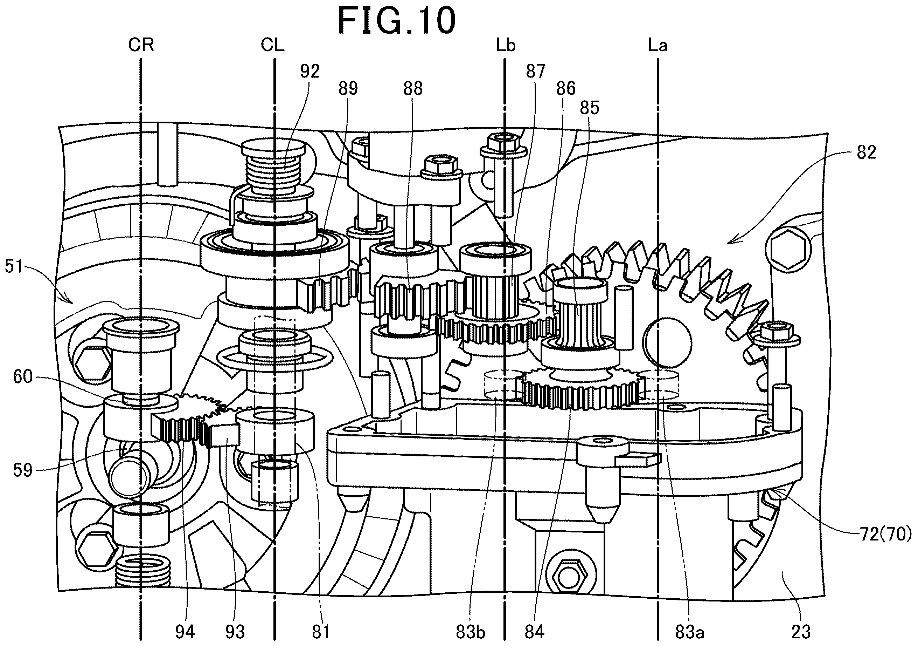

FIG. 8 is a view illustrating the transmission mechanism 82 in the gearcase 90 as viewed from above. Also, FIG. 9 is a section view taken along line b-b of FIG. 8, which illustrates a sectional structure of the mechanism portion 72 including the transmission mechanism 82. FIG. 10 is a diagram illustrating a main part of the transmission mechanism 82.

As shown in FIGS. 8 to 10, the transmission mechanism 82 includes drive gears 83a, 83b, a first reduction gear 84, a first small diameter gear 85, a second reduction gear 86, a second small diameter gear 87, a first driven gear 88 and a second driven gear 89, in which the gears 83a, 83b and 84 to 89 and the peripheral structure thereof are covered with the gearcase 90 shown in FIG. 4 and the like.

The drive gears 83a, 83b are disposed respectively on the drive shafts of the respective motors 71a, 71b, and are rotated integrally with the respective drive shafts. Each drive gear 83a, 83b meshes with the first reduction gear 84. The first small diameter gear 85 is a gear with a smaller diameter than the first reduction gear 84. The first small diameter gear 85 is disposed coaxially with the first reduction gear 84 and rotates integrally with the first reduction gear 84.

The first small diameter gear 85 meshes with the second reduction gear 86. The second small diameter gear 87 is a gear with a smaller diameter than the second reduction gear 86. The second small diameter gear 87 is disposed coaxially with the second reduction gear 86 and is rotated integrally with the second reduction gear 86. The second small diameter gear 87 meshes with the first driven gear 88.

In this manner, a speed reduction mechanism is formed to reduce the speed of the rotation of the motors 71a, 71b to transmit it to the first driven gear 88 by the gears 84, 85, 86 and 87 between the drive gears 83a, 83b and the first driven gear 88.

The first driven gear 88 meshes with the second driven gear 89. The second driven gear 89 is disposed coaxially with the clutch lever shaft 81 and is rotatable relative to the clutch lever shaft 81.

The second driven gear 89 is a gear to which the driving force of the clutch actuator 71 is input through the transmission mechanism 82. Thus, the second driven gear 89 is an example of the "actuator actuating member to which the driving force of the clutch actuator 71 is input" according to the present invention.

The clutch lever shaft 81 protrudes upward beyond the surrounding gears 83a, 83b and 84 to 88 and thus protrudes upward beyond the gearcase 90. Above the gearcase 90 and on an upper portion of the clutch lever shaft 81, the driven clutch lever 81r (FIG. 4 to FIG. 6) to which the clutch wire Wc is coupled is integrally disposed. The driven clutch lever 81r and an upper portion of the clutch lever shaft 81 protruding upward beyond the gearcase 90 are covered from an outside by the clutch lever cover 81c as shown in FIG. 5 and FIG. 7.

As shown in FIGS. 9 and 10, a return spring 92 is mounted to the clutch lever shaft 81. The return spring 92 biases the clutch lever shaft 81 in the direction opposite to the rotation direction by the clutch lever operation (rotation in the direction of clutch disconnection).

Below the second driven gear 89 on the clutch lever shaft 81, a first gear 93 is rotatably supported. The first gear 93 is a gear that is disposed coaxially with the clutch lever shaft 81 and transmits the rotation of the clutch lever and the second driven gear 89 to a second gear 94 which rotates integrally with the release shaft 60.

When the driving force of the clutch actuator 71 is input to the second driven gear 89, the first gear 93 rotates independently of the clutch lever and the clutch lever shaft 81 so as to rotate the second gear 94. Also, when the manual operation is input to the clutch lever and the clutch lever shaft 81, the first gear 93 rotates independently of the second driven gear 89 so as to rotate the second gear 94. The rotation of the second gear 94 causes the clutch device 51 to switch to the disconnected state incapable of transmitting power. By such configuration, the clutch lever shaft 81 and the clutch actuator 71 are able to operate in conjunction with each other at all times through the transmission mechanism 82. As a result, a system is configured to cause the clutch actuator 71 to connect/disconnect directly the clutch device 51.

The first gear 93 and the second gear 94 are an example of the "engaging members to engage the clutch lever shaft 81 and the release shaft 60 with each other" in the present disclosure. For this type of the engaging members, any structure such as a belt, a cam, a link mechanism or the like, besides the gear can be applied.

As shown in FIG. 10, the first gear 93 is a fan-shaped gear with a gear formed only in a range of a predetermined angle with respect to the axis CL of the clutch lever shaft 81. The first gear 93 is disposed to extend from the clutch lever shaft 81 toward the release shaft 60 in the rearward direction of the vehicle body.

The second gear 94 is a fan-shaped gear with a gear formed only in a range of a predetermined angle with respect to the axis of the release shaft 60. The second gear 94 is disposed to extend from the release shaft 60 toward the clutch lever shaft 81 in the forward direction of the vehicle body. In order to reduce the gear rotation angle toward the downstream in the transmission mechanism 82, the first gear 93 and the second gear 94 can be each formed as a small fan-shaped gear with a short size in the circumferential direction of each gear. As a result, there is advantageous to a reduction in size of the transmission mechanism 82 and thus the mechanism portion 72.

Specifically, even in the case where a large-diameter speed reduction gear is disposed for achieving a better reduction ratio, the use of a fan shape with a cut-out outside of the meshing range of the speed reduction gear enables the minimization of the jutting of the transmission mechanism 82 and the mechanism portion 72 outward in the vehicle width direction, and also a reduction in weight of the transmission mechanism 82 and the mechanism portion 72.

In the present configuration, as shown in FIG. 10 and the like, the clutch lever shaft 81 is arranged to be offset from the axis CR of the release shaft 60 in the axial radial direction. This makes it possible, as shown in FIG. 6 and FIG. 8, to arrange the clutch lever shaft 81 in a position closer to the front in the clutch device 51. As a result, the clutch lever shaft 81 can be arranged in a position forwardly apart from the legs of the occupant aboard the saddle riding vehicle 10. Thus, it is possible to circumvent a situation in which the driven clutch lever 81r, in particular, in an upper portion of the clutch lever shaft 81 and/or the like restricts the space for the occupant's legs around the clutch device 51, and/or the like. Also, as compared with the case where the clutch lever shaft 81 exists on the same shaft as the release shaft 60, it is easy to circumvent a situation in which the structure and shape around the clutch device 51 hinder the installation of the clutch control device 70.

Therefore, even if the power unit 12 to be installed with the clutch control device 70 has a different layout structure and/or shape, it is possible to circumvent a situation in which the driven clutch lever 81r, in particular, in an upper portion of the clutch lever shaft 81 and/or the like restricts the space for the occupant's legs around the clutch device 51, and/or the like, which in turn increase the degree of flexibility in installation of the clutch control device 70.

In the present configuration, as shown in FIG. 4 and the like, the first gear 93 and the second gear 94 are placed in a region overlapping the clutch device 51 as viewed from the side of the vehicle body corresponding to an axial view of the clutch shaft (corresponding to the main shaft 12b) of the clutch device 51. As a result, the first gear 93 and the second gear 94 can be arranged in a compact manner by using the region overlapping the clutch device 51.

Also, as viewed from the side of the vehicle body, a line LX (see FIG. 4) connects the release shaft 60 to the driven clutch lever 81r in the upper portion of the clutch lever shaft 81. Most engaging members (the first gear 93 and the second gear 94) to engage the clutch lever shaft 81 and the release shaft 60 with each other are positioned on any one side of the line LX. Because of this, large empty space can be ensured on the other side of the line LX. Because the empty space on the other side can be utilized as space for the legs of the occupant aboard the saddle riding vehicle 10, the configuration is suitable for ensuring large space for an occupant.

Also, the first gear 93 and the second gear 94 are covered with the right cover 23r disposed on the clutch device 51.

The first gear 93 and the second gear 94 are required to be assembled in a proper meshing position such that, when the driving force of the clutch actuator 71 is input, the clutch device 51 is able to operate from a normal state (the connected state in the present configuration) to an operating state (the disconnected state in the present configuration). Stated another way, the first gear 93 and the second gear 94 are required to be assembled such that a meshing position between the first gear 93 and the second gear 94 is proper in agreement with a reference position of the release shaft 60 corresponding to the normal state of the clutch device 51.

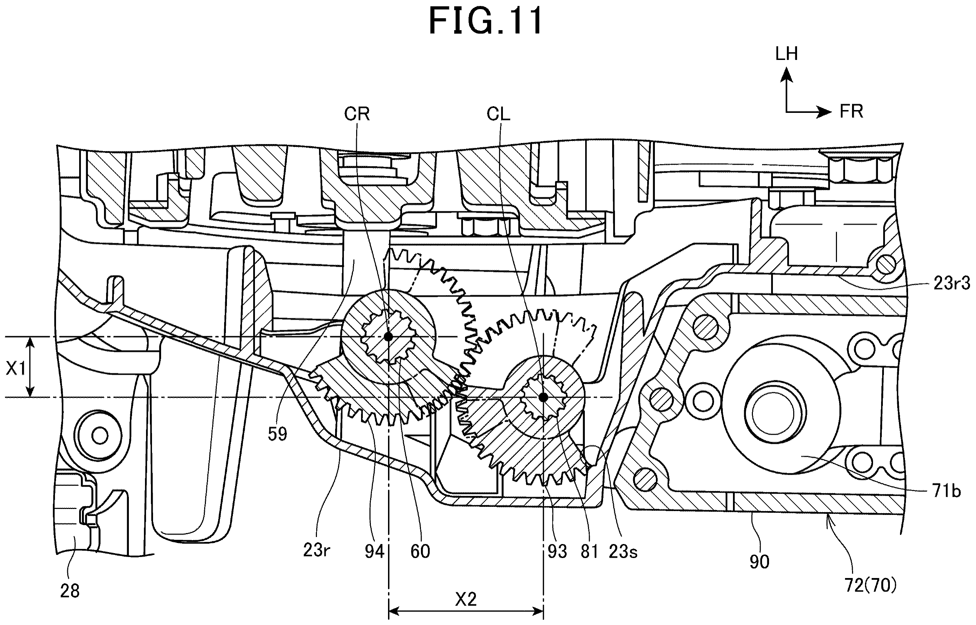

In the present configuration, as shown in FIG. 11, the rotation position of each gear 93, 94 is confined to an assembled position corresponding to the normal position of the release shaft 60 against the biasing force of the clutch spring 57 by a stopper 23s that is integrally disposed on the right cover 23r covering the first gear 93 and the second gear 94.

As a result, even if it is difficult to identify visually each gear 93, 94 because of the right cover 23r covering the gear 93, 94, each gear 93, 94 is able to be assembled with its rotation position easily set as a proper position. Thus, the assembly performance is improved.

In FIG. 11, reference sign X1 indicates a separated distance in the vehicle width direction between the axis CL of the clutch lever shaft 81 and the axis CR of the release shaft 60, while reference sign X2 indicates a separated distance in the longitudinal direction of the vehicle body. In the present configuration, as described above, the fan-shaped gear composed of the first gear 93 is disposed to extend in the rearward direction of the vehicle body, and the fan-shaped gear composed of the second gear 94 is disposed to extend in the forward direction of the vehicle body. This makes it possible that the separated distance X1 in the vehicle width direction is set shorter than the separate distance X2 in the longitudinal direction of the vehicle body, thus to contribute to the minimization of the jutting of the mechanism portion 72 outward in the vehicle width direction.

It is noted that, in the example shown in FIG. 11, the case where the stopper 23s abuts on the first gear 93 to confine the rotation position of the first gear 93 is provided by way of illustration. However, the position, number, shape and/or the like of the stopper 23s may be appropriately changed within in the range in which the rotation position of each gear 93, 94 can be defined as a proper assembled position.

Also, because the clutch control device 70 is mounted above the first bulge portion 23r1 disposed on the right cover 23r, the clutch control device 70 is able to be protected from flying debris and/or the like coming from below by the first bulge portion 23r1.

The right cover 23r is also mounted with the oil filler 76 positioned at the rear of the first bulge portion 23r1. The first bulge portion 23r1 may enable protection of the oil filler 76 from flying debris and/or the like coming from the front.

### [Other Embodiments]

The embodiments described above show only an aspect of the present invention, and modifications and applications are possible optionally within a range not departing from the scope of the present invention.

For example, in the embodiments described above, a description has been given of the case where the clutch lever shaft 81 is arranged in a position offset from the axis CR of the release shaft 60 in the forward direction of the vehicle body, which is not intended to be limiting. The clutch lever shaft 81 may be arranged in a position apart from the axis CR of the release shaft 60 in the rearward direction of the vehicle body. The direction, distance and/or the like in which the clutch lever shaft 81 is located apart from the axis CR of the release shaft 60 may be changed as appropriate.

Also, the case where the clutch control device 70 to which the present invention is applied is installed in the power unit 12 of the saddle riding vehicle 10 is provided by way of illustration, which is not intended to be limiting. The clutch control device 70 may be installed in a power unit of any saddle riding vehicle. It is noted that the saddle riding vehicle may be a three-wheeled vehicle, a four-wheeled vehicle and the like, without limitation to a two-wheeled vehicle.

An installation object to be installed with the clutch control device 70 to which the present invention is applied is not limited to the power unit 12 of the saddle riding vehicle 10. The clutch control device 70 may be installed in any installation object having a clutch device.

### [Configuration Supported by Above-described Embodiment]

The above embodiment supports the following constitutions.

### (Configuration 1)

A clutch control device includes: a release shaft that actuates a clutch device; a clutch lever shaft to which manual operation is input; and an actuator actuating member to which a driving force of a clutch actuator is input. The release shaft is rotated by the clutch lever shaft and the actuator actuating member, and the clutch lever shaft is arranged to be offset from an axis of the release shaft in an axial radial direction.

According to this configuration, the clutch lever shaft to which manual operation is input can be arranged in a position apart from the clutch shaft of the clutch device and/or the like. As a result, depending on the layout structure and/or shape of the installation object including the clutch device, the clutch lever shaft, which may possibly restrict the space for a user and/or a member around the clutch device, is more easily arranged apart from the user and/or the member around the clutch device. Therefore, the space for the user's legs is ensured, and the degree of flexibility in installation of the clutch control device is increased.

### (Configuration 2)

The clutch control device according to Configuration 1, further includes an engaging member to engage the clutch lever shaft and the release shaft with each other, and the engaging member is arranged in a region overlapping the clutch device as viewed from an axis of the clutch shaft of the clutch device.

According to this configuration, the engaging member can be arranged in a compact manner using the region overlapping the clutch device.

### (Configuration 3)

In the clutch control device according to Configuration 1 or 2, the engaging member to engage the release shaft and the clutch lever shaft with each other includes a first gear and a second gear that mesh with each other, and the first gear and the second gear are covered with a cover disposed on the clutch device. If the cover is installed, a rotation position of each of the gears is confined to an assembled position corresponding to a normal position of the release shaft by a stopper disposed on the cover.

According to this configuration, even if it is difficult to identify visually each gear because of the cover covering the gear, each gear is able to be easily assembled with its rotation position set as a proper position, thus improving the assembly performance.

### (Configuration 4)

In the clutch control device according to any of Configurations 1 to 3, the clutch control device is mounted above a bulge portion disposed on the clutch device.

According to this configuration, the bulge portion enables protection of the clutch control device from substances coming from below.

### (Configuration 5)

A saddle riding vehicle includes a clutch control device including: a release shaft that actuates a clutch device which performs connection/disconnection of power transmission between an engine and a transmission in a power unit; a clutch lever shaft to which manual operation is input; and an actuator actuating member to which a driving force of a clutch actuator is input. In the saddle riding vehicle, the release shaft is rotated by the clutch lever shaft and the actuator actuating member, and the clutch lever shaft is arranged in a position offset from an axis of the release shaft in any one of longitudinal directions of a vehicle body as viewed from a side of the vehicle body along an axial view of a clutch shaft of the clutch device.

According to this configuration, the clutch lever shaft to which manual operation is input is more easily arranged in a position apart from legs of an occupant as a user and/or the like around the clutch device, so that a space for occupant's legs is ensured and also the degree of flexibility in installation of the clutch control device is increased.

### (Configuration 6)

The saddle riding vehicle according to Configuration 5 includes a cover to cover an outside in a vehicle width direction of the power unit. The clutch control device is at least partially arranged on an outside in the vehicle width direction of the cover. On the cover, a bulge portion bulging outward in the vehicle width direction below the clutch control device, and an oil filler positioned at a rear of the bulge portion are disposed.

According to this configuration, by the bulge portion, the clutch control device can be protected from below and the oil filler can be protected from flying debris and/or the like coming from the front.

### Reference Signs List

10: saddle riding vehicle
12: power unit
12a: crankshaft
12b: main shaft (clutch shaft)
12c: countershaft
23: crankcase
23r: right crankcase cover
23r1: first bulge portion (bulge portion)
23r2: second bulge portion
24: cylinder portion
31: engine
41: transmission
51: clutch device
60: release shaft
70: clutch control device
71: clutch actuator
72: mechanism portion
76: oil filler
81: clutch lever shaft
82: transmission mechanism
89: second driven gear (actuator actuating members) 93: first gear (engaging member)
94: second gear (engaging member)
CL: axis of clutch lever shaft
CR: axis of release shaft

## Claims

1. A clutch control device, comprising:
a release shaft (60) that actuates a clutch device (51);
a clutch lever shaft (81) to which manual operation is input;
and
an actuator actuating member (89) to which a driving force of a clutch actuator (71) is input, **characterized in that**
the release shaft (60) is rotated by the clutch lever shaft (81) and the actuator actuating member (89), and
the clutch lever shaft (81) is arranged to be offset from an axis (CR) of the release shaft (60) in an axial radial direction.

2. The clutch control device according to claim 1, further comprising
an engaging member (93, 94) to engage the clutch lever shaft (81) and the release shaft (60) with each other, wherein
the engaging member (93,94) is arranged in a region overlapping the clutch device (51) as viewed from an axis of a clutch shaft (12b) of the clutch device (51).

3. The clutch control device according to claim 1 or 2, wherein
the engaging member to engage the release shaft (60) and the clutch lever shaft (81) with each other includes a first gear (93) and a second gear (94) that mesh with each other,
the first gear (93) and the second gear (94) are covered with a cover (23r) disposed on the clutch device (51), and
if the cover (23r) is installed, a rotation position of each of the gears (93, 94) is confined to an assembled position corresponding to a normal position of the release shaft (60) by a stopper (23s) disposed on the cover (23r).

4. The clutch control device according to any of claims 1, 2 or 3, wherein
the clutch control device is mounted above a bulge portion (23r1) disposed on the clutch device (51).

5. A saddle riding vehicle comprising the clutch control device (70) according to any of claims 1 to 4, wherein
the release shaft (60) actuates the clutch device (51) which performs connection/disconnection of power transmission between an engine (31) and a transmission (41) in a power unit (12), and
the clutch lever shaft (81) is arranged in a position offset from an axis (CR) of the release shaft (60) in any one of longitudinal directions of a vehicle body as viewed from a side of the vehicle body along an axial view of a clutch shaft (12b) of the clutch device (51).

6. The saddle riding vehicle according to claim 5, further comprising
a cover (23r) to cover an outside in a vehicle width direction of the power unit (12), wherein
the clutch control device (70) is at least partially arranged on an outside in the vehicle width direction of the cover (23r), and
on the cover (23r), a bulge portion (23r1) bulging outward in the vehicle width direction below the clutch control device (70), and an oil filler (76) positioned at a rear of the bulge portion (23r1) are disposed.
